# EUROPEAN PATENT SPECIFICATION

(11) **EP 1 233 649 B1**
(45) Date of publication and mention of the grant of the patent: **17.08.2005**
(21) Application number: 02251091.1
(22) Date of filing: 18.02.2002
(51) Int. Cl.: H05B 1/02, A47J 27/21, G05D 23/275, H01H 37/12, H01H 37/18

(54) **Thermally sensitive control for a liquid heating vessel**
Wärmeempfindliche Steuerung für ein Flüssigkeitserhitzungsgerät
Commande thermosensible pour un réceptacle chauffant pour liquides

(30) Priority: 19.02.2001 GB 0104062
(43) Date of publication of application: 21.08.2002
(60) Divisional application: 05005665.4
(73) Proprietor: STRIX LIMITED, Ronaldsway, Isle of Man IM9 2RG (GB)
(72) Inventor: Fumagalli, Richard Brandon, Boughton, Chester, Cheshire CH3 5EB (GB); Stimpson, Robert William, Douglas, Isle of Man IM2 5BN (GB); Scott, Michael James, Port St. Mary, Isle of Man IM9 5PH (GB); Taylor, John Crawshaw, Castletown, Isle of Man IM9 1HA (GB)
(74) Representative: Leckey, David Herbert

(56) References cited:
- WO-A-00/65625
- WO-A-01/06334
- WO-A-01/64084
- WO-A-95/34187
- WO-A-95/34188
- WO-A-98/30066
- WO-A-99/02080
- WO-A-99/48331
- WO-A-99/48333
- WO-A-99/54903
- GB-A- 2 308 743
- GB-A- 2 322 274
- GB-A- 2 329 523

## Description

The present invention relates to liquid heating vessels and to heating bases having a region for receiving a thermally sensitive actuator of a thermally sensitive control.

Such controls are discussed for example in Applicant's WO95/34187, the principles of which are embodied commercially in the Applicant's U17, U18, U27 and U28 series of controls.

Typically the controls comprise two thermally sensitive actuators, arranged, in use, in good thermal contact with the base of the vessel. More specifically, the actuators are snap action bimetallic actuators. In contrast to a creep action actuator, which will curve gradually as its temperature increases, a snap-action actuator is pre-stressed during its manufacture so that it will reverse its curvature suddenly upon reaching a predetermined temperature.

The control is operable to disconnect the power supply to the vessel heater in the event of the vessel heater overheating. This situation might arise for example if the vessel boils dry or if it is switched on with no liquid in it. The control may also comprise a steam sensitive actuator to disconnect the power supply to the vessel heater in the event of liquid in the vessel boiling, or a separate boiling switch may be provided.

Thus liquid heating vessels having controls as above are limited to heating liquid to a single temperature, i.e. boiling. In certain circumstances, however, it is desirable to be able to heat the liquid to a temperature below its boiling point. Various techniques have been proposed to achieve this objective.

One proposal is shown in Applicant's GB-A-2,329,523 where a creep action actuator is incorporated into a control of the type discussed in WO95/34187. Movement of this creep actuator is coupled by manually operable selector means to the spring loaded trip lever of the control. The trip lever may therefore be tripped at a selected temperature at or below the boiling point of the liquid.

This arrangement, however, has a number of disadvantages. Firstly it is limited to controls incorporating a trip lever, since it is the movement of the trip lever which acts to disconnect the power supply to the heater once the selected temperature is reached. Heating can subsequently only be resumed on intervention of the user to manually reset the trip lever. The arrangement is therefore unable to automatically maintain the liquid in the vessel at or around a desired temperature. The arrangement also requires significant modification of the control and additional components, adding to the manufacturing costs.

Accordingly, there is still a need for a variable temperature control for a liquid heating vessel which allows a liquid to be heated to one or more temperatures up to and including its boiling point.

The Applicants have recognised that one of the snap-acting bimetallic overheat protection actuators provided in the aforementioned control can be adapted to operate at a predetermined lower temperature, thereby obviating the need for a separate, lower temperature actuator. Furthermore, it has been appreciated that the operating temperature of the actuator, i.e. the temperature at which reversal of curvature occurs, may be varied on application of a biasing force to the actuator. A snap acting bimetallic actuator designed to reverse curvature at a certain temperature may therefore be controlled to operate at a range of different temperatures on application of a mechanical force to its blade.

Heating bases for a liquid heating vessel are also disclosed in WO-A-01/64084 published 07.09.2001, WO-A-99/54903, WO-A-99/48331, GB-A-2 308 743, WO-A-95/34188, WO-A-99/48333 and GB-A-2 322 274.

Accordingly, the present invention provides a heating base in or for use in a liquid heating vessel as described in claim 1. Advantageously a control may be provided comprising first and second snap action bimetallic actuators arranged so as in use to make good thermal contact with the base of the vessel; and biasing means arranged to exert a variable force on the second actuator so as to vary its operating temperature in use.

Thus the temperature of liquid in the vessel may be controlled by varying the biasing force exerted on the second actuator in use, a suitable mechanism being coupled to the second actuator to interrupt or reduce the power supply to the heater upon operation of the second actuator.

The first actuator will be chosen so as to have an operating temperature such that it will operate only in the event of an overheat condition. The second actuator, however, will not only act to operate at a lower temperature, indicative of liquid in the vessel attaining a desired temperature in normal use, but will also be able to act as an overheat protection actuator in a dry boil or dry switch on situation. In particular, when liquid is present in the vessel, the temperature of the vessel base will be indicative of the temperature of liquid in the vessel, a relationship which can be determined empirically. The relationship between the biasing force and the operating temperature of the actuator may also then be established empirically. The correlation between a given biasing force and the liquid temperature at which operation of the actuator will occur may thus be determined.

The biasing means may be configured so as to apply the biasing force to the actuator in the same direction as that in which the actuator deflects on heating. In this case, an increased biasing force will reduce the operating temperature of the actuator.

However, it is preferred that the biasing means is configured to apply the biasing force to the snap action bimetallic actuator in a direction opposite to its deflection, such that a higher operating temperature results upon application of the load. This allows an actuator with a relatively low nominal operating temperature to be adapted to operate at higher temperatures. In this case, the actuator is chosen to have a nominal operating temperature in an unbiased condition which will allow the base of the vessel to be heated to a temperature corresponding to the lowest desired liquid temperature.

The biasing means may exert force on the actuator indirectly, for example through movement of the entire control relative to the base of the vessel, but in the preferred arrangement, the biasing means acts directly on a part of the actuator. The biasing means may cooperate with any suitable part of the actuator, e.g. a peripheral part thereof.

Preferably, the biasing means comprises a spring, and the biasing force is varied by compression or expansion of the spring.

The spring may take any suitable configuration e.g. a coil or a leaf spring, but in a particularly preferred embodiment, the spring is a formed as a torsion spring.

The biasing spring is suitably coupled to a control member for varying the force applied by the spring. Preferably the control member comprises a cam surface which cooperates with the spring. Although the cam may be a sliding cam, a particularly beneficial and simple arrangement is obtained if a rotary cam is used. More specifically, in the preferred embodiment using a torsion spring as mentioned above, one limb of the spring may be arranged to cooperate with the actuator, and the other limb to cooperate with the rotary cam surface.

The cam and the spring may be preassembled for mounting together onto the control.

The cam surface may have a plurality of discrete levels, which would result in a vessel capable of heating liquid to a plurality of discrete predetermined temperatures. However, it is preferred that the cam surface is continuously variable, thus providing a continuous range of operating temperatures for the control.

In a preferred embodiment, the cam surface is operatively coupled to a spindle provided, in use, with a knob for manipulation by a user. The appliance is preferably marked with a suitable scale to link the position of the knob to the corresponding liquid temperature.

The control may also include resetting means, whereby the control member may be moved to apply a relatively high force to the spring and hence the actuator, causing the actuator to recover its original curvature. This resetting could be done by permitting the cam to rotate to a position at which it exerts a sufficiently high force on the actuator, or by configuring and arranging the control member so as to permit sliding in an axial direction, whereby resetting may be achieved merely by pressing the control member

A control may operate to disconnect the power to the vessel heater once the liquid in the vessel has reached a predetermined temperature, whereafter the power can only be reconnected by manually resetting the control. Such an arrangement would be achieved by the actuator acting to trip a trip lever, as used in Applicant's U18 or U28 controls. In such arrangements, a boiling sensitive actuator may also act on the trip lever, again as is the case in the Applicant's U18 or U28 controls.

In this case it should be appreciated that manually resetting the control will not only reconnect the power supply allowing the vessel heater to operate once more, but also permits the actuator blade to be reset in the same way as may be achieved by means of the cam as discussed above. This resetting would be achieved by arranging the trip lever to exert a sufficiently large force on the actuator to result in it regaining its original curvature as the trip lever is moved during the manual reset.

Alternatively, the control could cycle power to the heater and maintain the liquid in the vessel at or around the desired temperature. This could be achieved by the actuator simply operating with a leaf spring mounted contact, as used in Applicant's U17 or U27 controls. A separate steam switch, e.g. Applicant's R48 switch may be employed to disconnect the power when liquid in the vessel boils.

Whilst the invention has been described in terms of a double actuator arrangement above, it may be applicable in single actuators contexts.

It will be appreciated that the invention also extends to a liquid heating vessel incorporating a heating base in accordance with the invention as described in claim 9.

In one embodiment, the heater may comprise a sheathed heating element suitably secured to the base of the vessel. In such an arrangement the element is preferably mounted, e.g. soldered or brazed, to a heat diffusion member which is mounted to the non-liquid contacting side of the vessel base, and the actuators arranged in good thermal contact with the heat diffusion member. In order to at least partially isolate the variable temperature actuator from the direct heating effect of the heating element, and so obtain a better reflection of the liquid temperature within the vessel, the heat diffusion member is preferably provided with heat flow management means which reduces the flow of heat from the heater into the mounting location for that actuator. Such means may comprise one or more grooves or slots provided around selected portions of the mounting location. These grooves or slots may take any appropriate form e.g. they may be linear or curved, e.g. arcuate or parabolic. In the preferred embodiment, a plurality of circularly arcuate slots is provided around the mounting location.

The heater of the heating vessel may equally be a thick film heater suitably arranged in the base of the vessel. In this case the track layout of the heater may be configured so as at least partially to isolate the variable temperature actuator from the direct heating effect of the heating element and improve the sensitivity of the actuator in response to the liquid temperature within the vessel. This could be achieved for example by placing the actuator in contact with a portion of the heater where there are no, or relatively few, heating tracks, by selecting the track widths in that region appropriately (by making the tracks wider the local heating effect will be lower) or by effectively shorting out sections of track by over- or under-printing with a more highly conductive material such as silver. This will reduce the amount of heat generated in that region, whereby the actuator will be more sensitive to the temperature of liquid in the vessel.

Preferably, the invention also provides a liquid heating vessel having a thick film heater provided on its base, and a thermally sensitive control, said control comprising a first bimetallic actuator arranged so as in use to make a good thermal contact with a region of the base of the vessel for sensing a temperature indicative of the temperature of liquid being heated in the vessel, said region having a relatively low heating effect; and a second overheat protection bimetallic actuator arranged in good thermal contact with a portion of the heater having a relatively high heating effect.

The invention also extends to a heater adapted for use in such a liquid heating vessel.

A preferred embodiment of the invention will now be described with reference to the accompanying drawings in which:
Figure 1 is a view of a control embodying the invention;
Figure 2 shows a subassembly of the control of Figure 1;
Figure 3 is an exploded view of the subassembly of Figure 2;
Figure 4 shows a simplified schematic representation of certain components of the control; and
Figure 5 shows the base of a liquid heating vessel modified in accordance with the present invention.

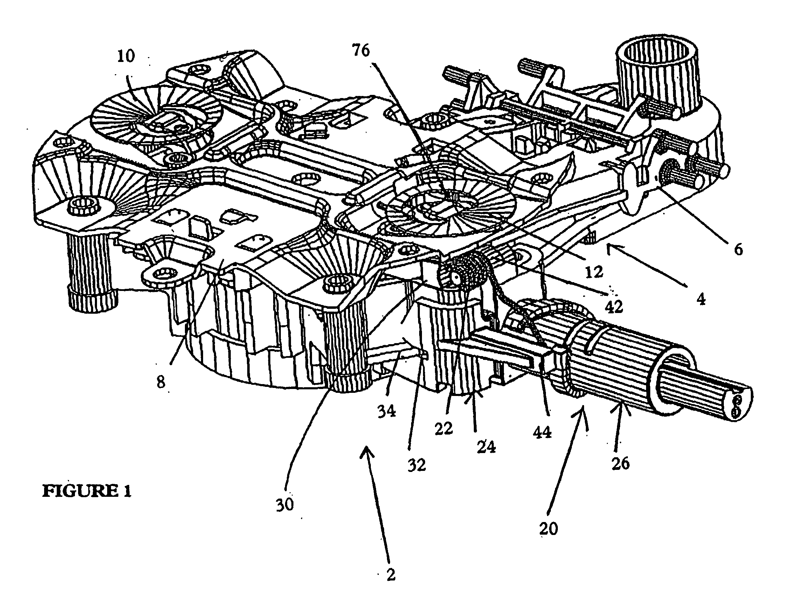

Figure 1 shows a control embodying the present invention. The control is based on the Applicant's U18 control but with certain components modified in accordance with the invention.

A full description of the functioning of a U18 type control can be found in WO95/34187. Briefly, however the control 2 comprises a body moulding 4 which mounts various electrical components of the control (not shown), a spring loaded trip lever 6 which is mounted to the body moulding 4, and a plate 8 which is mounted to the body moulding 4 and carries two snap action bimetallic actuators 10, 12. The bimetallic actuators are of the type described in GB 1542242. As described in WO95/34187, the bimetallic actuators 10, 12 are mounted in good thermal contact with the base of a liquid heating vessel, and when either actuator reaches its operating temperature, indicative of an overheat condition, it reverses its curvature with a snap action to open a set of electrical contacts in the control and trip the trip lever 6 which maintains the contacts open until the control is reset by a user.

Whereas in a conventional U18 both actuators are chosen to operate at the same nominal operating temperature, in a control modified in accordance with the present invention, one of the actuators 12 is replaced by an actuator with a lower nominal operating temperature. Furthermore the operating temperature of this actuator is varied by the application of a variable biasing force by biasing means 20.

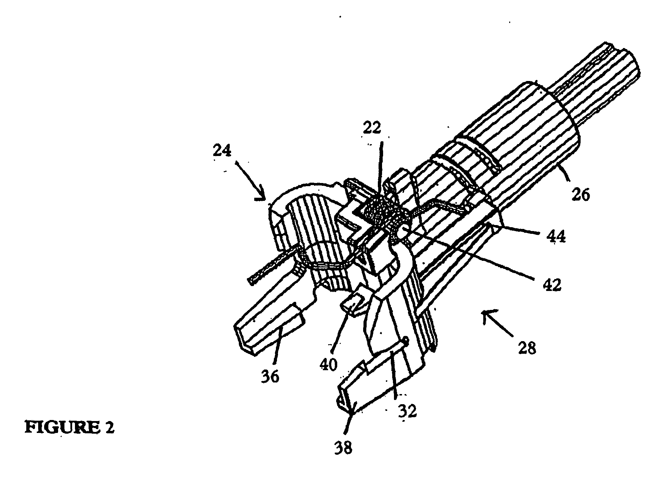

As can be seen from Figures 1, 2 and 3, the biasing means comprises a torsion spring 22, a support block 24 and a control member 26, which components are preassembled into a sub-assembly 28 which is clipped onto one of the arc shields 30 of the control moulding 4. As can be seen in Figures 1 and 2, the support block 24 is provided with a groove 32 which locates over a rib 34 provided on the control moulding 4 and is also provided with locating arms 36, 38 which engage with the sides of the arc shield 30, and a clip 40 for engaging over an edge of the arc shield 30 to hold the sub-assembly 28 in position.

The support block 24 includes a cylindrical spigot 42 for mounting the torsion spring 22. The spring 22 is retained on the spigot by a pillar 44 provided on the block 24 which engages one leg of the spring 22.

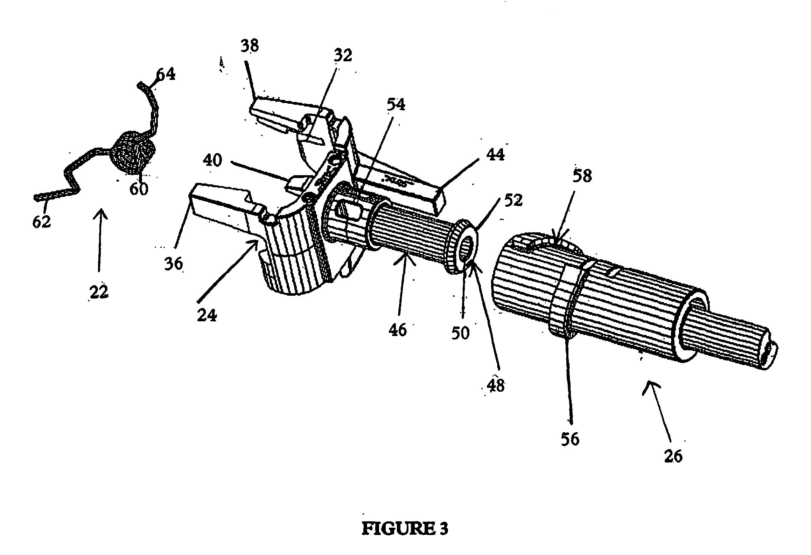

As can be seen most clearly in Figure 3, the support block 24 also includes a contoured spigot 46 for mounting the control member 26. The spigot 46 includes a longitudinal rib 48 which extends axially along the surface of the spigot 46 adjacent to a slot 50 provided in the enlarged end portion 52 of the spigot 46. The tubular control member 26 is push fitted over the end portion 52 of the spigot 46, the slot 50 allowing the passage of a lug (not shown) provided on an internal wall of the control member 26. The lug cooperates with the rib 48 to act as an end-stop, preventing rotation of the control member 26 through more than 360°. The enlarged end portion 52 acts to retain the control member on the spigot 46.

The spigot 46 is also provided with a larger diameter base portion 54 which receives the inner wall of the control member 26.

The control member 26 is provided with a non-stepped, axially facing, cam surface 56 which extends around substantially the whole of the control member 26 as shown in Fig. 3. The cam surface 56 is provided on a helical flight 58 extending around the control member 26.

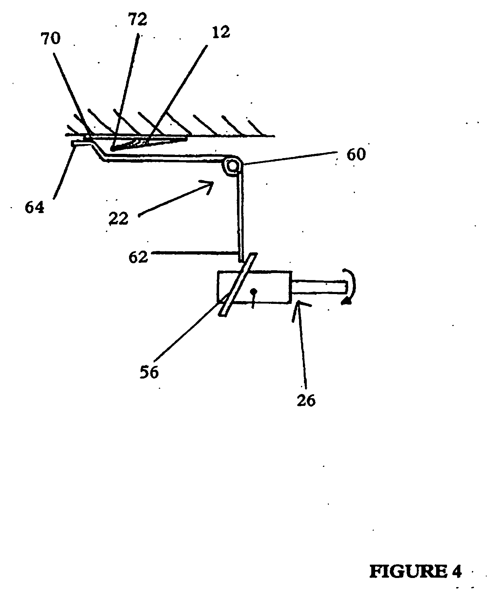

The cam surface 56 engages one limb of the torsion spring 22. The spring 22 is made of metal or an suitably other temperature resistant material and as described above is mounted on the spigot 42 of the control block moulding 24. The spring 22 comprises a coiled body 60 with respective end limbs 62, 64. As shown schematically in Figure 4, one limb 62 of the spring 22, locates against the cam surface 56, while the other limb 64 is positioned against a portion 70 of the bimetallic actuator 12.

In particular, it will be seen that the end of the limb 64 engages the peripheral portion 70 of the actuator 12 generally opposite the tongue 72 by which the actuator is mounted to the plate 8(not shown) of the control.

In order to facilitate the positioning of the biasing spring 22 in contact with the actuator 12, the push rod which would normally transmit the movement of the actuator to the trip lever 6 of the control has also been modified from that in the standard U18 control. In particular, whilst in the U18 the push rod is a separate ceramic rod which is located in a locating bore 74, in this construction the rod is formed as an integral part 76 of the trip lever 6, located approximately opposite the standard position.

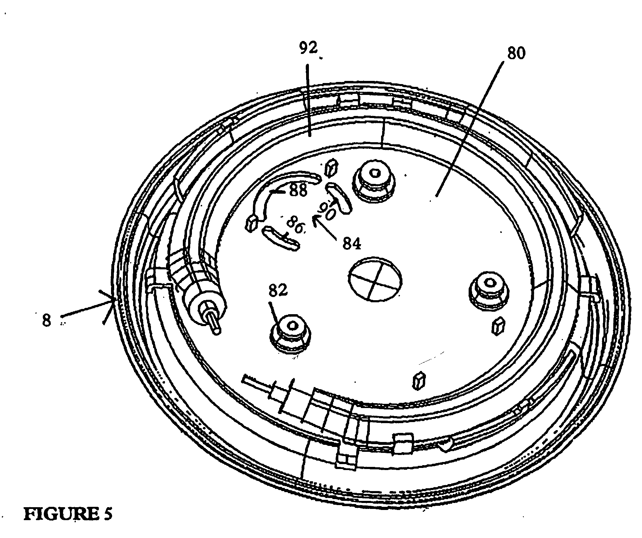

When the subassembly 28 is mounted to the main control body, the complete control is then mounted to the base of or for a liquid heating vessel. Such a base 8 is shown in Figure 5. A heat diffuser plate 80 of e.g. aluminium is mounted to the base of the vessel in a conventional manner eg by welding or brazing. The control is mounted to mounting bosses 82 provided on the diffuser plate 80. When mounted to the diffuser plate 80, the actuator 12 engages a region 84 of the diffuser plate 80 which is surrounded on three sides by three spaced slots 86, 88, 90. These slots act to isolate the region 84 to some extent from the sheathed heater 92 provided around the edge of the diffuser plate 80 so that the temperature of the region 84 reflects more accurately the temperature of the base of the vessel and thus the temperature of the liquid being heated inside the vessel. No such slots are provided on the opposite side of the diffuser plate 80 in the region where the overheat protection actuator 10 locates.

Operation of the control unit will now be described. If it is desired to heat liquid to a predetermined temperature, the control member 26 is rotated clockwise from its rest position by its knob (not shown) to a desired rotational position corresponding to the desired temperature (anti-clockwise movement of the control member is prevented by engagement of the rib 44 with the internal lug provided on the axial wall of the control member 26). As the control member 26 rotates the torsion spring 60 is stressed by the engagement of the limb 62 with the cam surface 56. As the rotation proceeds, a greater force is applied to the torsion spring 60, which in turn increases the biasing force acting on the peripheral portion of actuator 12 via the spring limb 64. Due to this increasing force, the temperature which the blade must attain in order to reverse its curvature is increased. Accordingly, as the control member 26 is rotated, the operating temperature of the actuator increases, meaning that liquid being heated in the vessel will be heated to a higher temperature before operation of the actuator 12. The control member 26 will be held in its desired angular position by friction. In its limit clockwise position, the operating temperature of the actuator can be set to above 100°C, whereby the vessel acts to boil liquid.

When the actuator 12 operates, it operates on the push rod 76 provided on the trip lever 6 to open a set of electrical contacts in the electrical supply to the vessel heater thereby disconnecting the power supply to the heater. The tripping of the trip lever 6 also acts to maintain the contacts open, even after resetting of the actuator, thereby preventing re-heating of the liquid until the trip lever is reset manually by a user.

The actuator 12 will reset when its temperature falls below a predetermined value. This may be accelerated by applying a high force against the actuator 12. This could, for example be achieved by rotating the control member to its "boil" position, or, in a modification of the arrangement shown, moving the control member axially to load the spring.

Various modifications may be made to the embodiment shown without departing from the scope of the invention. For example, no trip lever need be provided, in which case the control may act to cycle power to the heater to maintain the liquid in the vessel at or around the desired temperature. One of the Applicant's U17 series of controls may be suitably modified to perform such a function.

It will also be appreciated that the invention is suitable for liquid heating vessels which use either sheathed heating elements or thick film elements attached to or forming at least a part of the base of the vessel.

Also, the control may be modified to allow resetting of the actuator 12 by allowing the control member 26 to move axially on the spigot 46, so that pushing the member 26 will reset the actuator.

## Claims

1. A heating base (8) in or for a liquid heating vessel, said base having a heater (92) and a region (84) for receiving a thermally sensitive actuator (12) of a thermally sensitive control (2) for sensing a temperature indicative of the temperature of liquid being heated in the vessel, **characterised in that** said base (8) is provided with heat flow management means (86, 88, 90) which reduces the flow of heat from the heater (92) into the said region (84) of the base (8).

2. A heating base as claimed in claim 1 wherein said heater (92) is a sheathed heating element mounted to a heat diffusion member (80) provided on said base (8).

3. A heating base as claimed in claim 2 wherein said heat flow management means are provided in said heat diffusion member (80).

4. A heating base as claimed in claim 3 wherein said heat flow management means comprises one or more grooves or slots (86, 88, 90) provided around selected portions of the mounting location.

5. A heating base as claimed in claim 4 wherein said grooves or slots (86, 88, 90) are arcuate in shape.

6. A heating base as claimed in claim 5 wherein said grooves or slots (86, 88, 90) define a circular mounting region (84).

7. A heating base as claimed in any of claims 2 to 6 wherein said heating element (92) is arranged around the periphery of said heat diffusion member (80), and said heat flow management means (86, 88, 90) lie between the heating element (92) and the region (84).

8. A heating base as claimed in claim 1 wherein said heater is a thick film heater.

9. A liquid heating vessel comprising a heating base as claimed in any preceding claim and a thermally sensitive control (2) having a thermally sensitive actuator (12) for sensing a temperature indicative of the temperature of liquid being heated in the vessel, said actuator (12) being in good thermal contact with said region (84) of said base (8).

10. A liquid heating vessel as claimed in claim 10 wherein said actuator (12) is a snap acting bimetallic actuator.

11. A liquid heating vessel as claimed in claim 9 or 10 wherein said control (2) comprises first and second snap action bimetallic actuators (10, 12) arranged in good thermal contact with the base of the vessel and biasing means (20) arranged to exert a variable force on the second actuator (12) so as to vary its operating temperature in use, said second actuator (12) being mounted in good thermal contact with the said region (84) of the heating base (8).

12. A liquid heating vessel as claimed in claim 11 wherein the biasing means (20) is configured to apply the biasing force to said second actuator (12) in a direction opposite to its deflection, such that a higher operating temperature results upon application of a higher biasing force.

13. A liquid heating vessel as claimed in claim 11 or 12 wherein the biasing means exerts force directly on a part of the second actuator (12).

14. A liquid heating vessel as claimed in claim 11, 12 or 13 wherein the biasing means comprises a spring (22).

15. A liquid heating vessel as claimed in claim 14 wherein the spring (22) is a coil, leaf or torsion spring.

16. A liquid heating vessel as claimed in claim 14 or 15 wherein the biasing spring (22) is coupled to a control member (26) for varying the force applied by the spring (22) to the second actuator (12).

17. A liquid heating vessel as claimed in claim 16 wherein the control member (26) comprises a cam surface (56) which cooperates with the spring (22).

18. A liquid heating vessel as claimed in claim 17 wherein the cam surface (56) is a rotary cam surface.

19. A liquid heating vessel as claimed in claim 17 or 18 wherein said spring comprises a torsion spring (22) having two limbs extending from the ends thereof, one limb (64) of the spring cooperating with the actuator (12), and the other limb (62) cooperating with the cam surface (56).

20. A liquid heating vessel as claimed in any of claims 17 to 19 wherein the cam surface (56) comprises a plurality of discrete levels.

21. A liquid heating vessel as claimed in any of claims 17 to 19 wherein the cam surface (56) is continuously variable.

22. A liquid heating vessel as claimed in any of claims 16 to 21 wherein the control member (26) is operatively coupled to a spindle provided, in use, with a knob for manipulation by a user.

23. A liquid heating vessel as claimed in any of claims 11 to 22 further including means, for example a trip lever (6), for resetting the second actuator (12) after its operation.

24. A liquid heating vessel as claimed in claim 23 as dependent upon any of claims 16 to 22 wherein the control member (26) is configured and arranged so as to slide in an axial direction to effect the resetting.

25. A liquid heating vessel as claimed in any of claims 9 to 24 further comprising boiling sensitive means for disconnecting the power supply to the heater of the vessel when liquid in the vessel boils.

## Patentansprüche

1. Heizbasis (8) in einem oder für ein Flüssigkeitsheizgefäß, wobei die Basis eine Heizeinrichtung (92) und einen Bereich (84) zur Aufnahme eines thermisch sensitiven Aktuators (12) einer thermisch sensitiven Steuer/Regeleinrichtung (2) zum Erfassen einer Temperatur aufweist, welche auf die Temperatur der Flüssigkeit hinweist, die in dem Gefäß erhitzt wird, **dadurch gekennzeichnet, dass** die Basis (8) mit Wärmestromsteuerungsmitteln (86, 88, 90) versehen ist, welche den Wärmestrom von der Heizeinrichtung (92) in den Bereich (84) der Basis (8) verringern.

2. Heizbasis nach Anspruch 1, wobei die Heizeinrichtung (92) ein ummanteltes Heizelement ist, welches an ein Wärmediffusionselement (80) angebracht ist, das an der Basis (8) vorgesehen ist.

3. Heizbasis nach Anspruch 2, wobei die Wärmestromsteuerungsmittel in dem Wärmediffusionselement (80) vorgesehen sind.

4. Heizbasis nach Anspruch 3, wobei die Wärmestromsteuerungsmittel eine oder mehrere Nuten oder Schlitze (86, 88, 90) umfassen, welche um ausgewählte Abschnitte der Anbringungsstelle herum vorgesehen sind.

5. Heizbasis nach Anspruch 4, wobei die Nuten oder Schlitze (86, 88, 90) bogenförmig sind.

6. Heizbasis nach Anspruch 5, wobei die Nuten oder Schlitze (86, 88, 90) einen kreisförmigen Anbringungsbereich (84) definieren.

7. Heizbasis nach einem der Ansprüche 2 bis 6, wobei das Heizelement (92) um den Umfang des Wärmediffusionselements (80) herum angeordnet ist, und die Wärmestromsteuerungsmittel (86, 88, 90) zwischen dem Heizelement (92) und dem Bereich (84) liegen.

8. Heizbasis nach Anspruch 1, wobei die Heizeinrichtung eine Dickfifmheizeinrichtung ist.

9. Flüssigkeitsheizgefäß mit einer Heizbasis nach einem der vorhergehenden Ansprüche und mit einer thermisch sensitiven Steuer/Regeleinrichtung (2) mit einem thermisch sensitiven Aktuator (12) zum Erfassen einer Temperatur, welche auf die Temperatur von einer Flüssigkeit hinweist, die in dem Gefäß erhitzt wird, wobei der Aktuator (12) in gutem thermischen Kontakt mit dem Bereich (84) der Basis (8) ist.

10. Flüssigkeitsheizgefäß nach Anspruch 10, wobei der Aktuator (12) ein Bimetallaktuator mit Schnappwirkung ist.

11. Flüssigkeitsheizgefäß nach Anspruch 9 oder 10, wobei die Steuer/Regeleinrichtung (2) einen ersten und einen zweiten Schnappwirkungs-Bimetallaktuator (10, 12) umfasst, welche in gutem thermischen Kontakt mit der Basis des Gefäßes angeordnet sind, und ein Vorspannmittel (20) umfasst, welches derart angeordnet ist, dass es eine veränderbare Kraft auf den zweiten Aktuator (12) ausübt, um seine Betriebstemperatur im Gebrauch zu verändem, wobei der zweite Aktuator (12) in gutem thermischen Kontakt mit dem Bereich (84) der Heizbasis (8) angebracht ist.

12. Flüssigkeitsheizgefäß nach Anspruch 11, wobei das Vorspannmittel (20) derart konfiguriert ist, dass es die Vorspannkraft auf den zweiten Aktuator (12) in einer seiner Krümmung entgegengesetzten Richtung ausübt, sodass aus einer Ausübung einer höheren Vorspannkraft eine höhere Betriebstemperatur resultiert.

13. Flüssigkeitsheizgefäß nach Anspruch 11 oder 12, wobei das Vorspannmittel auf einen Teil des zweiten Aktuators (12) eine Kraft direkt ausübt.

14. Flüssigkeitsheizgefäß nach Anspruch 11, 12 oder 13, wobei das Vorspannmittel eine Feder (22) umfasst.

15. Flüssigkeitsheizgefäß nach Anspruch 14, wobei die Feder (22) eine Schrauben-, Blatt- oder Torsionsfeder ist.

16. Flüssigkeitsheizgefäß nach Anspruch 14 oder 15, wobei die Vorspannfeder (22) mit einem Steuer/Regelelement (26) gekoppelt ist, um die Kraft zu verändern, welche durch die Feder (22) auf den zweiten Aktuator (12) ausgeübt wird.

17. Flüssigkeitsheizgefäß nach Anspruch 16, wobei das Steuer/Regelelement (26) eine Nockenfläche (56) umfasst, welche mit der Feder (22) zusammenwirkt.

18. Flüssigkeitsheizgefäß nach Anspruch 17, wobei die Nockenfläche (56) eine drehende Nockenfläche ist.

19. Flüssigkeitsheizgefäß nach Anspruch 17 oder 18, wobei die Feder eine Torsionsfeder (22) umfasst, welche zwei von ihren Enden abstehende Schenkel aufweist, wobei ein Schenkel (64) der Feder mit dem Aktuator (12) zusammenwirkt und der andere Schenkel (62) mit der Nockenfläche (56) zusammenwirkt.

20. Flüssigkeitsheizgefäß nach einem der Ansprüche 17 bis 19, wobei die Nockenfläche (56) eine Mehrzahl von diskreten Niveaus umfasst.

21. Flüssigkeitsheizgefäß nach einem der Ansprüche 17 bis 19, wobei die Nockenfläche (56) stufenlos veränderbar ist.

22. Flüssigkeitsheizgefäß nach einem der Ansprüche 16 bis 21, wobei das Steuer/Regelelement (26) betriebsmäßig mit einer Spindel gekoppelt ist, welche im Gebrauch mit einem Knopf für die Handhabung durch einen Nutzer versehen ist.

23. Flüssigkeitsheizgefäß nach einem der Ansprüche 11 bis 22, weiterhin Mittel umfassend, z.B. einen Schalthebel (6), zum Zurücksetzen des zweiten Aktuators (12) nach seiner Betätigung.

24. Flüssigkeitsheizgefäß nach Anspruch 23, unter Rückbeziehung auf einen der Ansprüche 16 bis 22, wobei das Steuer/Regelelement (26) derart konfiguriert und angeordnet ist, dass es in einer axialen Richtung gleitet, um das Zurücksetzen zu bewirken.

25. Flüssigkeitsheizgefäß nach einem der Ansprüche 9 bis 24, weiterhin umfassend kochsensitive Mittel zum Unterbrechen der Stromversorgung zu dem Heizelement des Gefäßes, wenn in dem Gefäß Flüssigkeit kocht.

## Revendications

1. Base chauffante (8) dans ou pour un récipient pour chauffer un liquide, laquelle base comprend une unité de chauffage (92) et une région (84) pour recevoir un actionneur thermo-sensible (12) d'une commande thermo-sensible (2) servant à détecter une température indiquant la température du liquide que l'on chauffe dans le récipient, **caractérisée en ce que** ladite base (8) comporte des moyens de gestion du flux de chaleur (86, 88, 90) qui diminuent le flux de chaleur provenant de l'unité de chauffage (92) dans ladite région (84) de la base (8).

2. Base chauffante telle que revendiquée dans la revendication 1, dans laquelle ladite unité de chauffage (92) consiste en un élément chauffant protégé monté sur un élément de diffusion de chaleur (80) situé sur ladite base (8).

3. Base chauffante telle que revendiquée dans la revendication 2, dans laquelle lesdits moyens de gestion du flux de chaleur sont disposés dans ledit élément de diffusion de chaleur (80).

4. Base chauffante telle que revendiquée dans la revendication 3, dans laquelle lesdits moyens de gestion du flux de chaleur comprennent une ou plusieurs rainures ou fentes (86, 88, 90) disposées autour de parties sélectionnées de l'emplacement de montage.

5. Base chauffante telle que revendiquée dans la revendication 4, dans laquelle lesdites rainures ou fentes (86, 88, 90) sont de forme arquée.

6. Base chauffante telle que revendiquée dans la revendication 5, dans laquelle lesdites rainures ou fentes (86, 88, 90) définissent une région de montage circulaire (84).

7. Base chauffante telle que revendiquée dans l'une quelconque des revendications 2 à 6, dans laquelle ledit élément chauffant (92) est disposé autour de la périphérie dudit élément de diffusion de chaleur (80), tandis que lesdits moyens de gestion de flux de chaleur (86, 88, 90) se situent entre l'élément de chauffage (92) et la région (84).

8. Base chauffante telle que revendiquée dans la revendication 1, dans laquelle ladite unité de chauffage est un film de chauffage épais.

9. Récipient pour chauffer un liquide comprenant une base chauffante telle que revendiquée dans l'une quelconque des revendications précédentes, et une commande thermo-sensible (2) comportant un actionneur thermo-sensible (12) servant à détecter une température indiquant la température du liquide que l'on chauffe dans le récipient, lequel actionneur (12) se trouve en bon contact thermique avec ladite région (84) de ladite base (8).

10. Récipient pour chauffer un liquide tel que revendiqué dans la revendication 9, dans lequel ledit actionneur (12) consisté en un actionneur bimétallique à action brusque.

11. Récipient pour chauffer un liquide tel que revendiqué dans la revendication 9 ou 10, dans lequel ladite commande (2) comprend un premier et un second actionneurs bimétalliques à action brusque (10, 12) disposés de manière à avoir un bon contact thermique avec la base du récipient, ainsi qu'un moyen de poussée (20) conçu pour appliquer une force variable sur le second actionneur (12) de manière à faire varier sa température de fonctionnement lors de l'utilisation, lequel second actionneur (12) est monté de manière à avoir un bon contact thermique avec ladite région (84) de ladite base (8).

12. Récipient pour chauffer un liquide tel que revendiqué dans la revendication 11, dans lequel le moyen de poussée (20) est conçu pour appliquer la force de poussée au dit second actionneur (12) dans une direction opposée à celle de son écartement de sorte qu'une température de fonctionnement plus élevée se traduit par l'application d'une plus grande force de poussée.

13. Récipient pour chauffer un liquide tel que revendiqué dans la revendication 11 ou 12, dans lequel le moyen de poussée applique une force directement sur une partie du second actionneur (12).

14. Récipient pour chauffer un liquide tel que revendiqué dans la revendication 11, 12 ou 13, dans lequel le moyen de poussée comprend un ressort (22).

15. Récipient pour chauffer un liquide tel que revendiqué dans la revendication 14, dans lequel le ressort (22) consiste en un ressort hélicoïdal, à lame ou de torsion.

16. Récipient pour chauffer un liquide tel que revendiqué dans la revendication 14 ou 15, dans lequel le ressort de poussée (22) est couplé à un élément de commande (26) pour faire varier la force appliquée par le ressort (22) au second actionneur (12).

17. Récipient pour chauffer un liquide tel que revendiqué dans la revendication 16, dans lequel l'élément de commande (26) comprend une surface de came (56) qui coopère avec le ressort (22).

18. Récipient pour chauffer un liquide tel que revendiqué dans la revendication 17, dans lequel la surface de came (56) est une surface de came rotative.

19. Récipient pour chauffer un liquide tel que revendiqué dans la revendication 17 ou 18, dans lequel ledit ressort comprend un ressort de torsion (22) possédant deux membres qui s'étendent depuis ses extrémités, un membre (64) du ressort entrant en interaction avec l'actionneur (12) et l'autre membre (62) coopérant avec la surface de came (56).

20. Récipient pour chauffer un liquide tel que revendiqué dans l'une quelconque des revendications 17 à 19, dans lequel la surface de came (56) comprend plusieurs niveaux discrets.

21. Récipient pour chauffer un liquide tel que revendiqué dans l'une quelconque des revendications 17 à 19, dans lequel la surface de came (56) varie de façon continue.

22. Récipient pour chauffer un liquide tel que revendiqué dans l'une quelconque des revendications 16 à 21, dans lequel l'élément de commande (26) est couplé opérationnellement à une broche qui, à son tour, comporte un bouton en vue de la manipulation par l'utilisateur.

23. Récipient pour chauffer un liquide tel que revendiqué dans l'une quelconque des revendications 11 à 22, comprenant en outre un moyen, tel qu'un levier de déclenchement (6), permettant de réinitialiser le second actionneur (12) après son fonctionnement.

24. Récipient pour chauffer un liquide tel que revendiqué dans la revendication 23 considérée dépendante de l'une quelconque des revendications 16 à 22, dans lequel l'élément de commande (26) est configuré et disposé de manière à coulisser dans le sens axial pour effectuer la réinitialisation.

25. Récipient pour chauffer un liquide tel que revendiqué dans l'une quelconque des revendications 9 à 24, comprenant en outre un moyen sensible à l'ébullition permettant de déconnecter l'alimentation électrique de l'unité de chauffage du récipient lorsque le liquide dans le récipient bout.
